# EUROPEAN PATENT APPLICATION

(11) **EP 4 685 450 A2**
(43) Date of publication of application: **28.01.2026**
(21) Application number: 25189996.9
(22) Date of filing: 16.07.2025
(51) Int. Cl.: G01M 9/06

(54) **COMPACT TRAVERSING SYSTEMS FOR PROBES OR OTHER DEVICES**

(30) Priority: 25.07.2024 US 202418784580
(71) Applicant: RTX Corporation, Farmington, CT 06032 (US)
(72) Inventor: LADDY-LOCKS, Spencer Ean, Farmington (US)
(74) Representative: Dehns

(57) **Abstract**

A system (100; 600; 700; 800; 900) includes a probe body (102; 602; 702; 802; 902), a translation actuator (110) configured to linearly translate the probe body (102; 602; 702; 802; 902), and a yaw rotation actuator (120) configured to rotate the probe body (102; 602; 702; 802; 902). The probe body (102; 602; 702; 802; 902) includes a linear shaped portion. The linear shaped portion includes a helical rack (104). The translation actuator (110) includes a helical worm gear (116) configured to interface with the helical rack (104) such that a rotation of the helical worm gear (116) causes a linear translation of the probe body (102; 602; 702; 802; 902). The yaw rotation actuator (120) includes a keyed worm gear (126) configured to interface with the helical rack (104) such that a rotation of the keyed worm gear (126) causes a rotation of the probe body (102; 602; 702; 802; 902).

## Description

### TECHNICAL FIELD

This disclosure generally relates to traversing systems. More specifically, this disclosure relates to compact traversing systems for probes or other devices.

### BACKGROUND

Traversing systems are commonly used to traverse the positions of probes. For example, a traversing system may be used to position an aero probe within a wind tunnel during a flow test. Existing traversing systems are large and include several separate components that limit placement of the traversing systems during use, which can also limit the traversing systems' ability to place probes in desired areas.

### SUMMARY

This disclosure relates to compact traversing systems for probes or other devices.

In some examples, a system includes a probe body, a translation actuator configured to linearly translate the probe body, and a yaw rotation actuator configured to rotate the probe body. The probe body includes a linear shaped portion, and the linear shaped portion includes a helical rack.

Any single one or any combination of the following features may be used with the examples above. The translation actuator may include a helical worm gear configured to interface with the helical rack such that rotation of the helical worm gear causes linear translation of the probe body, a worm screw configured to interface with the helical worm gear such that rotation of the worm screw causes rotation of the helical worm gear, and a motor configured to rotate the worm screw. The helical worm gear may include a threaded portion configured to interface with the helical rack and a worm wheel configured to interface with the worm screw. The yaw rotation actuator may include a keyed worm gear configured to interface with the helical rack such that rotation of the keyed worm gear causes rotation of the probe body, a worm screw configured to interface with the keyed worm gear such that rotation of the worm screw causes rotation of the keyed worm gear, and a motor configured to rotate the worm screw. The keyed worm gear may include a keyed portion configured to interface with the helical rack and a worm wheel configured to interface with the worm screw. The probe body may include at least one of an aero probe, a laser diode, an imaging sensor, a manipulator/grabber, or a fiber optic filament. At least one of the translation actuator and the yaw rotation actuator may include an O-ring face seal configured to seal a mounting surface of the actuator to a different mounting surface. The translation actuator and the yaw rotation actuator may be disposed in a stack arrangement. The helical worm gear and the keyed worm gear may be configured such that rotation of the helical worm gear at a speed greater than zero revolutions per minute (RPM) and simultaneous rotation of the keyed worm gear at a speed of zero RPM causes linear translation of the probe body. The helical worm gear and the keyed worm gear may be configured such that simultaneous rotation of the helical worm gear and the keyed worm gear at a same speed greater than zero RPM in a same rotational direction causes rotation of the probe body. The helical worm gear and the keyed worm gear may be configured such that rotation of the keyed worm gear at a first speed greater than zero RPM and simultaneous rotation of the helical worm gear at a second speed different from the first speed causes linear translation and rotation of the probe body.

In other examples, an apparatus includes a worm wheel configured to interface with a worm screw such that rotation of the worm screw causes rotation of the apparatus. The apparatus also includes a probe body positioning interface disposed within an axis of rotation of the apparatus.

Any single one or any combination of the following features may be used with the examples above. The probe body positioning interface may be a threaded portion configured to interface with a helical rack of a probe body such that rotation of the apparatus causes translation of the probe body. The probe body positioning interface may be a keyed portion configured to interface with a helical rack of a probe body such that rotation of the apparatus causes rotation of the probe body. The apparatus may include at least one O-ring piston seal disposed concentrically with the worm wheel.

In still other examples, a method includes simultaneously (i) rotating a helical worm gear interfaced with a helical rack of a probe body at a first speed and (ii) rotating a keyed worm gear disposed in a stacked arrangement with the helical worm gear and interfaced with the helical rack of the probe body at a second speed. Rotating the helical worm gear at the first speed and rotating the keyed worm gear at the second speed causes a traversal of the probe body.

Any single one or any combination of the following features may be used with the examples above. The first speed may be greater than zero RPM, the second speed may be zero RPM, and the traversal of the probe body may be linear translation. The first speed may be greater than zero RPM, the second speed may be identical to the first speed, the helical worm gear and the keyed worm gear may be rotated in the same rotational direction, and the traversal of the probe body may be rotation. At least the second speed may be greater than zero RPM, the first speed may be a different speed from the second speed, and the traversal of the probe body may be linear translation and rotation.

Other technical features may be readily apparent to one skilled in the art from the following figures, descriptions, and claims.

### BRIEF DESCRIPTION OF THE DRAWINGS

For a more complete understanding of this disclosure, reference is made to the following description, taken in conjunction with the accompanying drawings, in which:
FIGURES 1A-1C illustrate an example compact traversing system in accordance with this disclosure;
FIGURE 2 illustrates an example helical worm gear in accordance with this disclosure;
FIGURE 3 illustrates an example keyed worm gear in accordance with this disclosure;
FIGURE 4 illustrates an example linear translation in accordance with this disclosure;
FIGURE 5 illustrates an example rotation in accordance with this disclosure;
FIGURE 6 illustrates another example compact traversing system in accordance with this disclosure;
FIGURE 7 illustrates another example compact traversing system in accordance with this disclosure;
FIGURE 8 illustrates another example compact traversing system in accordance with this disclosure; and
FIGURE 9 illustrates another example compact traversing system in accordance with this disclosure.

### DETAILED DESCRIPTION

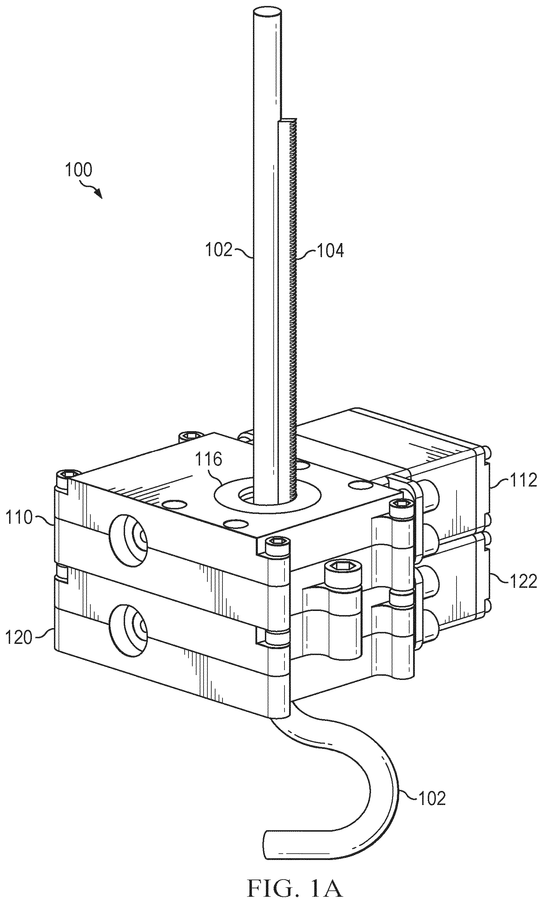

FIGURES 1A through 9, described below, and the various embodiments used to describe the principles of the present disclosure are by way of illustration only and should not be construed in any way to limit the scope of this disclosure. Those skilled in the art will understand that the principles of the present disclosure may be implemented in any type of suitably arranged device or system.

As noted above, traversing systems are commonly used to traverse the positions of probes. For example, a traversing system may be used to position an aero probe within a wind tunnel during a flow test. Existing traversing systems are large and include several separate components that limit placement of the traversing systems during use, which can also limit the traversing systems' ability to place probes in desired areas. This disclosure provides compact traversing systems that integrate major components into a single compact assembly. The provided compact traversing systems offer several advantages with respect to size, placement of the traversing systems, self-contained nature, and the ability to place several of the compact traversing systems within close proximity to one another.

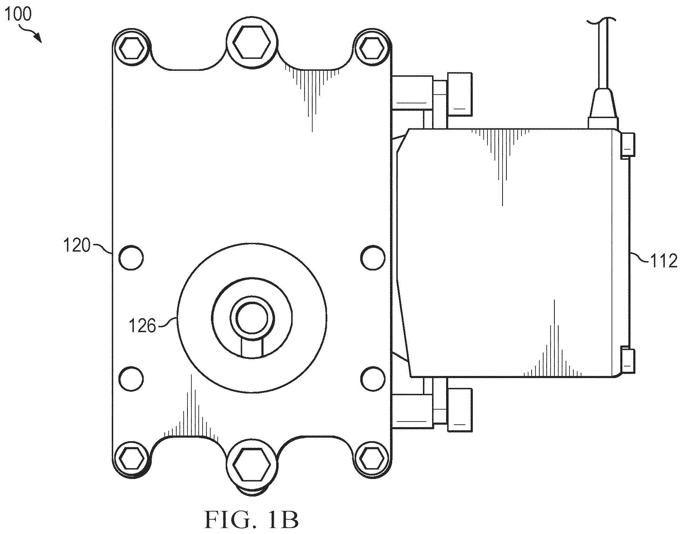

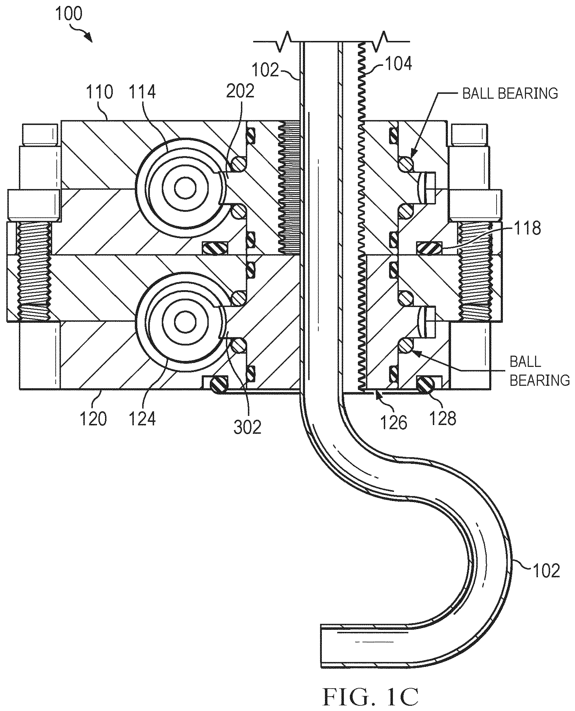

FIGURES 1A-1C illustrate an example compact traversing system 100 in accordance with this disclosure. It should be understood that the various views of FIGURES 1A-1C may omit certain components of compact traversing system 100 for clarity, but that compact traversing system 100 includes the aggregate of the components illustrated in FIGURES 1A-1C. FIGURE 1A illustrates a perspective view of compact traversing system 100. FIGURE 1B illustrates a top looking down view of compact traversing system 100. FIGURE 1C illustrates a side cutaway view of compact traversing system 100.

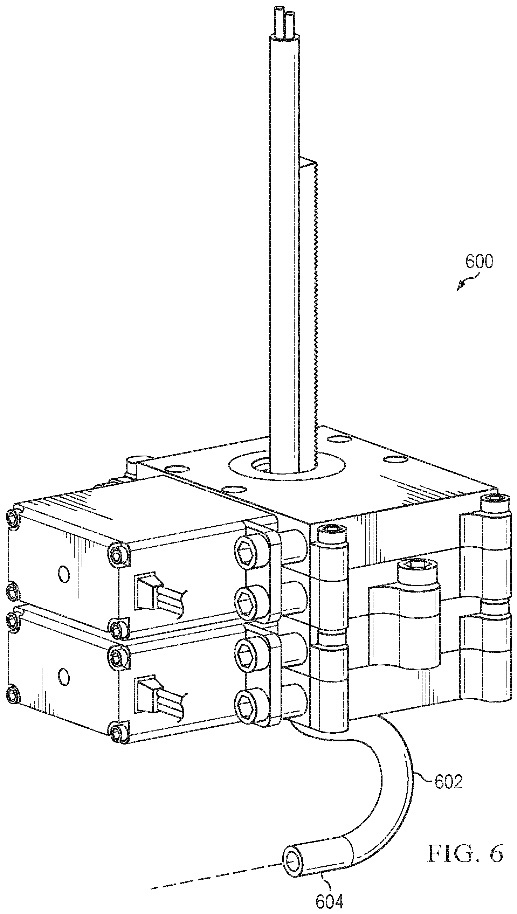

As shown in FIGURES 1A-1C, compact traversing system 100 includes a probe body 102. Probe body 102 is depicted as an aero probe known as a cobra probe. However, it should be understood that probe body 102 may be a probe body for any type of probe, such as the probes described herein with respect to FIGURES 6-9. Furthermore, it should be understood that while probe body 102 has a linear shaped portion, the distal ends of probe body 102 may have any shape. The linear shaped portion of probe body 102 includes a helical rack 104. Helical rack 104 includes a plurality of teeth configured to engage with a gear mechanism. In some embodiments, helical rack 104 may be a separate component fastened to probe body 102. For example, helical rack 104 may be brazed, glued, secured with fasteners, welded, etc. to probe body 102. In other embodiments, helical rack 104 may be integral to probe body 102. For example, helical rack 104 may be molded, machined, stamped, formed, etc. into probe body 102.

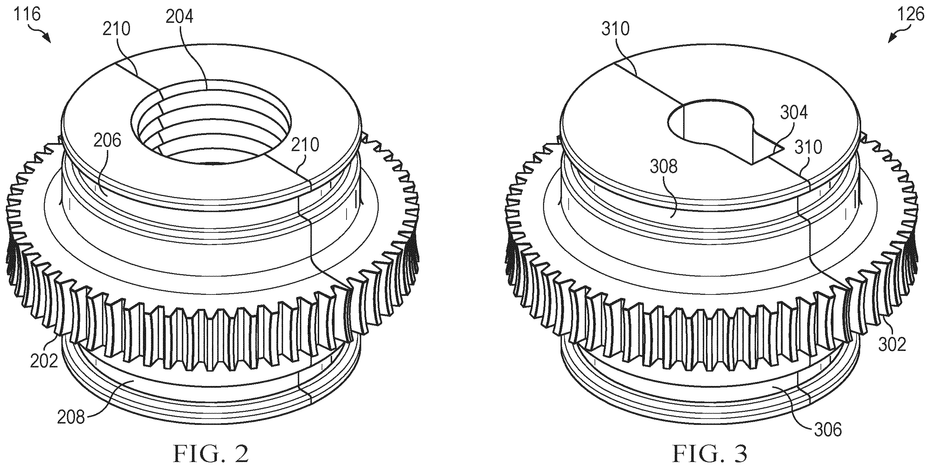

Compact traversing system 100 includes a translation actuator 110. Translation actuator 110 includes a motor 112. Motor 112 may include a feedback mechanism (for example, a hall effect sensor), and is configured to rotate a worm screw 114. For example, a controller of compact traversing system 100 may control motor 112 to rotate worm screw 114, and the controller may receive feedback from motor 112 to track the rotational position and/or number of rotations of worm screw 114 during control of motor 112. Motor 112 may be, for example, a continuous rotation servo motor, a stepper motor, a DC motor with an attached encoder, etc. Worm screw 114 is configured to interface with a helical worm gear 116 via worm wheel 202. Helical worm gear 116 is further illustrated in FIGURE 2. Rotation of worm screw 114 causes a corresponding rotation of helical worm gear 116. As can be seen in FIGURE 1C, helical worm gear 116 is supported by a plurality of ball bearings. Helical worm gear 116 includes a threaded portion 204 disposed within the axis of rotation of helical worm gear 116. Threaded portion 204 is configured to interface with the teeth of helical rack 104. Additionally helical worm gear 116 includes first and second O-ring piston seals 206 and 208 disposed concentrically with worm wheel 202. Seals 206 and 208 are configured to seal against the enclosure of translation actuator 110 to prevent dirt entry and mitigate grease escape. Translation actuator 110 further includes O-ring face seal 118. Seal 118 is configured to seal the mounting surface of translation actuator 110 to the top surface of yaw rotation actuator 120. In some embodiments, helical worm gear 116 may be a single piece. In other embodiments, helical worm gear 116 may include a first half and a second half. For example, it can be seen in FIGURE 2 that helical worm gear 116 includes a first half and a second half joined at join line 210. In such embodiments, helical worm gear 116 may be separated to accept probe body 102 during assembly of compact traversing system 100. In this manner, probe body 102 may include oversize and/or irregularly shaped portions at the distal ends of probe body 102 that may not fit through threaded portion 204.

Compact traversing system 100 further includes a yaw rotation actuator 120. Yaw rotation actuator 120 includes a motor 122. Motor 122 may include a feedback mechanism (for example, a hall effect sensor), and is configured to rotate a worm screw 124. For example, a controller of compact traversing system 100 may control motor 122 to rotate worm screw 124, and the controller may receive feedback from motor 122 to track the rotational position and/or number of rotations of worm screw 124 during control of motor 122. Motor 122 may be, for example, a continuous rotation servo motor, a stepper motor, a DC motor with an attached encoder, etc. Worm screw 124 is configured to interface with a keyed worm gear 126 via worm wheel 302. keyed worm gear 126 is further illustrated in FIGURE 3. Rotation of worm screw 124 causes a corresponding rotation of keyed worm gear 126. As can be seen in FIGURE 1C, keyed worm gear 126 is supported by a plurality of ball bearings. Keyed worm gear 126 includes a keyed portion 304 disposed within the axis of rotation of keyed worm gear 126. Keyed portion 304 is configured to interface with helical rack 104. Additionally keyed worm gear 126 includes first and second O-ring piston seals 306 and 308 disposed concentrically with worm wheel 302. Seals 306 and 308 are configured to seal against the enclosure of yaw rotation actuator 120 to prevent dirt entry and mitigate grease escape. Yaw rotation actuator 120 further includes O-ring face seal 128. Seal 128 is configured to seal the mounting surface of yaw rotation actuator 120 to a different mounting surface. For example, the different mounting surface may be a surface of a test article or testing chamber to which compact traversing system 100 is attached. In some embodiments, keyed worm gear 126 may be a single piece. In other embodiments, keyed worm gear 126 may include a first half and a second half. For instance, it can be seen in FIGURE 3 that keyed worm gear 126 includes a first half and a second half joined at join line 310. In such embodiments, keyed worm gear 126 may be separated to accept probe body 102 during assembly of compact traversing system 100. In this manner, probe body 102 may include oversize and/or irregularly shaped portions at the distal ends of probe body 102 that may not fit through keyed portion 304.

As can be seen in FIGURES 1A and 1C, translation actuator 110 and yaw rotation actuator 120 are arranged such that helical worm gear 116 and keyed worm gear 126 share an identical axis if rotation. In this manner, helical worm gear 116 and keyed worm gear 126, as well as translation actuator 110 and yaw rotation actuator 120, may be described as being disposed in a stacked arrangement. While translation actuator 110 is depicted as stacked on top of yaw rotation actuator 120, it should be understood that any stacking arrangement of translation actuator 110 and yaw rotation actuator 120 (and therefore any stacking arrangement of helical worm gear 116 and keyed worm gear 126) may be utilized in embodiments of the disclosed compact traversing system.

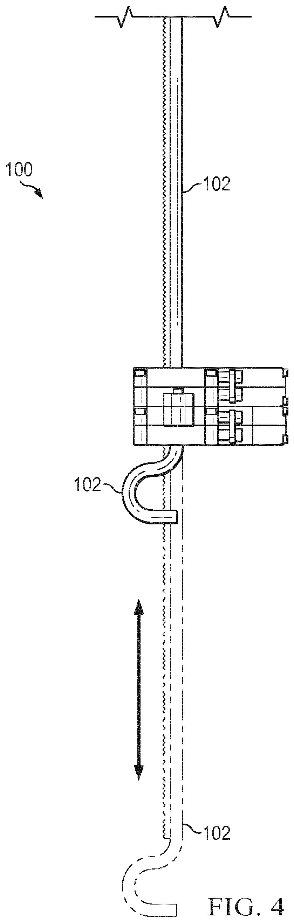

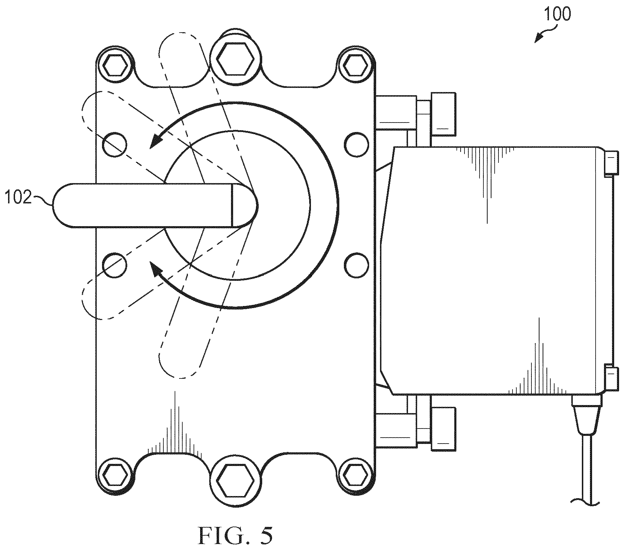

Operation of translation actuator 110 and/or yaw rotation actuator 120 may cause a traversal of probe body 102. For example, operation of translation actuator 110 and/or yaw rotation actuator 120 may cause a linear translation and/or a rotation of probe body 102. An example linear translation of probe body 102 is illustrated in FIGURE 4. An example rotation of probe body 102 is illustrated in FIGURE 5. Whether the traversal is a linear translation, a rotation, or a combination of both is dependent on a rotational speed of helical worm gear 116 and keyed worm gear 126. For example, helical worm gear 116 and keyed worm gear 126 may be both stopped (i.e., a rotational speed of zero revolutions per minute [RPM]), one of helical worm gear 116 and keyed worm gear 126 may be stopped, and the other rotating at a speed greater than zero RPM, helical worm gear 116 and keyed worm gear 126 may be both operating at an identical speed greater than zero RPM, or helical worm gear 116 and keyed worm gear 126 may be both operating at different speeds greater than zero RPM.

When helical worm gear 116 is rotated at a speed greater than zero RPM and keyed worm gear 126 is rotated at a speed of zero RPM (i.e., keyed worm gear 126 is stopped), probe body 102 is linearly translated as shown in FIGURE 4. The direction of the linear translation corresponds with the direction of rotation of helical worm gear 116.

When helical worm gear 116 and keyed worm gear 126 are both rotated in the same rotational direction at an identical speed greater than zero RPM, probe body 102 is rotated as shown in FIGURE 5. The direction of the rotation corresponds with the direction of rotation of helical worm gear 116 and keyed worm gear 126.

When keyed worm gear 126 is rotated at any speed different from helical worm gear 116 (including when helical worm gear 116 is rotating at zero rpm [i.e., helical worm gear 116 is stopped]), probe body 102 simultaneously rotates and linearly translates. The direction of the rotation and the linear translation corresponds with the direction of rotation of helical worm gear 116 and the direction of rotation of keyed worm gear 126.

Although FIGURES 1A-1C illustrate one example of a compact traversing system 100, various changes may be made to FIGURES 1A-1C. For example, the length of the linear shaped portion of probe body 102 could be changed, and the various gearing depicted in FIGURES 1A-1C could be configured for different ratios than shown in FIGURES 1A-1C.

As previously described, a compact traversing system may include any configuration of a probe body. For example, the probe body may be an aero probe as shown in FIGURES 1A-1C, or the probe body may have some other configuration. For example, the probe body may be an aero probe other than a cobra probe, or the probe body may be configured according to the examples of FIGURES 6-9. However, it should be understood that the probe body is not limited to the examples described herein.

FIGURE 6 illustrates an example compact traversing system 600 in accordance with this disclosure. In the example of FIGURE 6, compact traversing system 600 is substantially similar to compact traversing system 100, except that probe body 102 has been replaced with a probe body 602. Probe body 602 includes a laser diode 604.

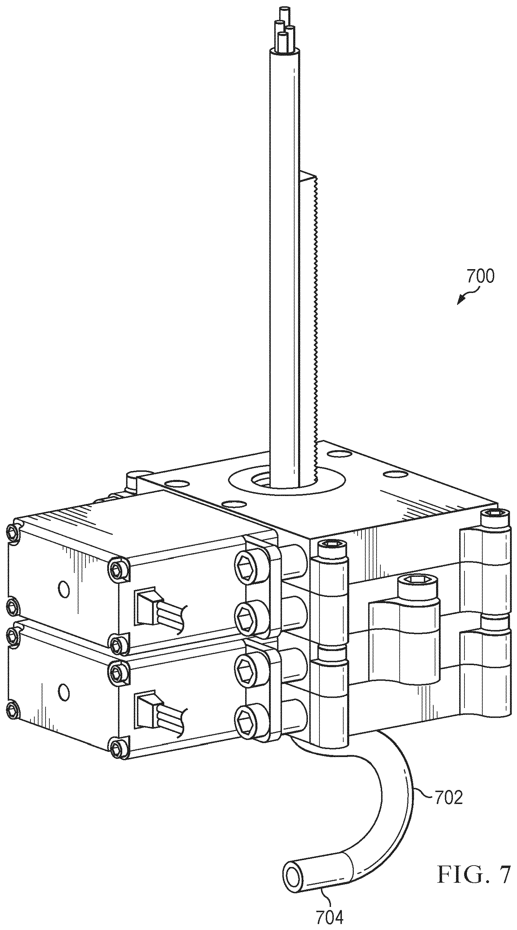

FIGURE 7 illustrates an example compact traversing system 700 in accordance with this disclosure. In the example of FIGURE 7, compact traversing system 700 is substantially similar to compact traversing system 100, except that probe body 102 has been replaced with a probe body 702. Probe body 702 includes an imaging sensor 704. For example, imaging sensor 704 may be a digital camera sensor or some other imaging sensor.

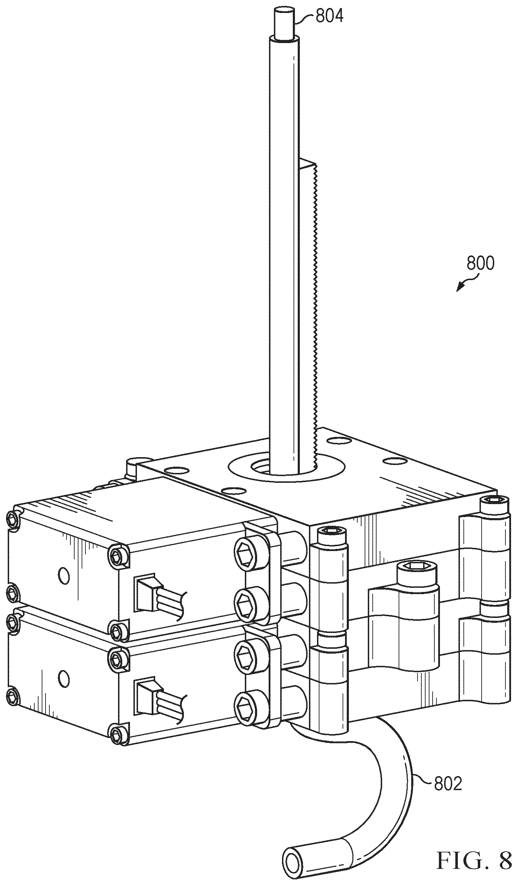

FIGURE 8 illustrates an example compact traversing system 800 in accordance with this disclosure. In the example of FIGURE 8, compact traversing system 800 is substantially similar to compact traversing system 800, except that probe body 102 has been replaced with a probe body 802. Probe body 802 includes an optical fiber 804.

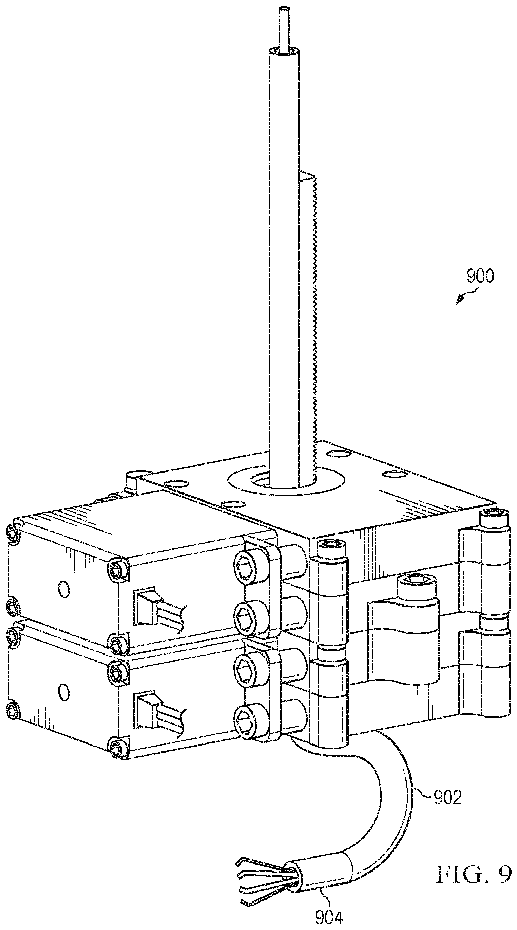

FIGURE 9 illustrates an example compact traversing system 900 in accordance with this disclosure. In the example of FIGURE 9, compact traversing system 900 is substantially similar to compact traversing system 100, except that probe body 102 has been replaced with a probe body 902. Probe body 902 includes a manipulator/grabber 904.

It may be advantageous to set forth definitions of certain words and phrases used throughout this patent document. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present disclosure should not be read as implying that any particular element, step, or function is an essential or critical element that must be included in the claim scope. The scope of patented subject matter is defined only by the allowed claims. Moreover, none of the claims invokes 35 U.S.C. § 112(f) with respect to any of the appended claims or claim elements unless the exact words "means for" or "step for" are explicitly used in the particular claim, followed by a participle phrase identifying a function. Use of terms such as (but not limited to) "mechanism," "module," "device," "unit," "component," "element," "member," "apparatus," "machine," "system," "processor," or "controller" within a claim is understood and intended to refer to structures known to those skilled in the relevant art, as further modified or enhanced by the features of the claims themselves, and is not intended to invoke 35 U.S.C. § 112(f).

While this disclosure has described certain embodiments and generally associated methods, alterations and permutations of these embodiments and methods will be apparent to those skilled in the art. Other changes, substitutions, and alterations are also possible without departing from the scope of this disclosure, as defined by the following claims.

## Claims

1. A system comprising:
a probe body including a linear shaped portion, the linear shaped portion including a helical rack;
a translation actuator configured to linearly translate the probe body; and
a yaw rotation actuator configured to rotate the probe body.

2. The system of claim 1, wherein the translation actuator includes:
a helical worm gear configured to interface with the helical rack such that rotation of the helical worm gear causes linear translation of the probe body;
a worm screw configured to interface with the helical worm gear such that rotation of the worm screw causes rotation of the helical worm gear; and
a motor configured to rotate the worm screw, and optionally,
wherein the helical worm gear includes:
a threaded portion configured to interface with the helical rack; and
a worm wheel configured to interface with the worm screw.

3. The system of claim 1 or 2, wherein the yaw rotation actuator includes:
a keyed worm gear configured to interface with the helical rack such that rotation of the keyed worm gear causes rotation of the probe body;
a worm screw configured to interface with the keyed worm gear such that rotation of the worm screw causes rotation of the keyed worm gear; and
a motor configured to rotate the worm screw, and optionally,
wherein the keyed worm gear includes:
a keyed portion configured to interface with the helical rack; and
a worm wheel configured to interface with the worm screw.

4. The system of any of claims 1, 2 or 3, wherein the probe body includes at least one of an aero probe, a laser diode, an imaging sensor, a manipulator/grabber, or a fiber optic filament; and/or
wherein at least one of the translation actuator or the yaw rotation actuator includes an O-ring face seal configured to seal a mounting surface of the actuator to a different mounting surface.

5. The system of claim 1, wherein the translation actuator and the yaw rotation actuator are disposed in a stacked arrangement.

6. The system of claim 5, wherein:
the translation actuator includes a helical worm gear configured to interface with the helical rack; and
the yaw rotation actuator includes a keyed worm gear configured to interface with the helical rack.

7. The system of claim 6, wherein the helical worm gear and the keyed worm gear are configured such that rotation of the helical worm gear at a speed greater than zero revolutions per minute (RPM) and simultaneous rotation of the keyed worm gear at a speed of zero RPM causes linear translation of the probe body.

8. The system of claim 7, wherein the helical worm gear and the keyed worm gear are configured such that simultaneous rotation of the helical worm gear and the keyed worm gear at a same speed greater than zero RPM in a same rotational direction causes rotation of the probe body, and optionally,
wherein the helical worm gear and the keyed worm gear are configured such that rotation of the keyed worm gear at a first speed greater than zero RPM and simultaneous rotation of the helical worm gear at a second speed different from the first speed causes linear translation and rotation of the probe body.

9. An apparatus comprising:
a worm wheel configured to interface with a worm screw such that rotation of the worm screw causes rotation of the apparatus; and
a probe body positioning interface disposed within an axis of rotation of the apparatus.

10. The apparatus of claim 9, wherein:
the apparatus includes a separable first and second half; and
the probe body positioning interface is a threaded portion configured to interface with a helical rack of a probe body such that rotation of the apparatus causes translation of the probe body; or,
the probe body positioning interface is a keyed portion configured to interface with a helical rack of a probe body such that rotation of the apparatus causes rotation of the probe body.

11. The apparatus of claim 9 or 10, further comprising:
at least one O-ring piston seal disposed concentrically with the worm wheel.

12. A method comprising:
simultaneously:
rotating a helical worm gear interfaced with a helical rack of a probe body at a first speed; and
rotating a keyed worm gear disposed in a stacked arrangement with the helical worm gear and interfaced with the helical rack of the probe body at a second speed;
wherein rotating the helical worm gear at the first speed and rotating the keyed worm gear at the second speed causes a traversal of the probe body.

13. The method of claim 12, wherein:
the first speed is greater than zero revolutions per minute (RPM);
the second speed is zero RPM; and
the traversal of the probe body is linear translation.

14. The method of claim 12, wherein:
the first speed is greater than zero revolutions per minute (RPM);
the second speed is identical to the first speed;
the helical worm gear and the keyed worm gear are rotated in the same rotational direction; and
the traversal of the probe body is rotation.

15. The method of claim 12, wherein:
at least the second speed is greater than zero revolutions per minute (RPM)
the first speed is a different speed than the second speed; and
the traversal of the probe body is linear translation and rotation.
